# EUROPÄISCHE PATENTSCHRIFT

(11) **EP 2 336 652 B1**
(45) Veröffentlichungstag und Bekanntmachung des Hinweises auf die Patenterteilung: **23.11.2016**
(21) Anmeldenummer: 10015218.0
(22) Anmeldetag: 02.12.2010
(51) Int. Cl.: F24D 12/02, F24H 8/00

(54) **Heizgerät**
Heating device
Appareil de chauffage

(30) Priorität: 17.12.2009 DE 102009058934
(43) Veröffentlichungstag der Anmeldung: 22.06.2011
(73) Patentinhaber: Vaillant GmbH, 42859 Remscheid (DE)
(72) Erfinder: Langer, Ulrich, 58239 Schwerte (DE); Salg, Frank, 42897 Remscheid (DE); Spahn, Hans-Josef, 40699 Erkrath (DE)
(74) Vertreter: Hocker, Thomas

(56) Entgegenhaltungen:
- EP-A1- 0 772 011
- EP-A1- 1 329 673
- EP-A2- 0 127 939
- WO-A1-2006/067820
- AT-A4- 505 416
- DE-A1- 2 822 808
- DE-A1- 3 149 183
- DE-A1- 3 322 991
- DE-C1- 19 906 406

## Beschreibung

Die Erfindung bezieht sich auf ein Heizgerät.

Bei üblichen Heizgeräten wird zwischen Brennwert- und Heizwertgeräten unterschieden. Bei Brennwertgeräten wird das Abgas eines brennstoffbetriebenen Brenners derart weit abgekühlt, dass Kondensationswärme genutzt werden kann. Hierdurch ist ein thermischer Wirkungsgrad von 108 % bezogen auf den Heizwert möglich. Minimal mögliche Abgastemperatur ist hierbei die Rücklauftemperatur des Heizkreislaufs oder die Kaltwassereinlauftemperatur. Die Abgase sind in diesem Fall feucht und verfügen über wenig Auftrieb, so dass Brennwertgeräte Gebläse und eine feuchtigkeitsdichte Abgasleitung benötigen. Bei Heizwertgeräten wird das Abgas nur soweit abgekühlt, dass keine Kondensation des im Abgas befindlichen Wasserdampfes stattfindet. Hierdurch ist das Abgas auch warm genug, um durch den thermischen Auftrieb in einem Kamin entweichen zu können. Ferner können mehrere abgasseitig druckentkoppelte Heizwertgeräte gemeinsam an einem Kamin betrieben werden. Zum gemeinsamen Betrieb ist es notwendig, dass nicht die Abgase eines Gerätes durch ein anderes stillstehendes Gerät in dessen Aufstellraum entweichen können und der Kamin über den entsprechenden Querschnitt verfügt.

Beim Austausch von Heizgeräten wird angestrebt, dass Heizgeräte zumindest durch Brennwertgeräte ersetzt werden. Hierbei ergibt sich jedoch das Problem, dass das Abgas eines Brennwertgerätes derart feucht ist, dass eine Kaminsanierung notwendig wird und eine Mehrfachbelegung nicht mehr möglich ist. Zur Lösung dieses Problems ist zum Beispiel aus DE 202 09 753 bekannt, dass feuchtes Abgase eines Brennwertgerätes wieder aufgeheizt werden kann, damit es trocken mit thermischem Auftrieb in einen Kamin geleitet werden kann. Dies kann beispielsweise durch einen heißen Abgasstrom, der über einen Bypass am Kondensationswärmetauscher vorbei geleitet wird, geschehen. Auf diese Art kann die Kondensationswärme im Abgas genutzt werden, so dass mit derartigen Geräten in Verbindung mit einer Niedertemperatur- Heizung ein Wirkungsgrad von 103 % bezogen auf den Heizwert möglich ist. In Verbindung mit im Altbau üblichen Hochtemperatur- Heizungen liegt der Wirkungsgrad rücklauftemperaturbedingt unterhalb 100 %. Ebenfalls können die Effizienz mindernde anlagenbedingte hydraulische Effekte (wie zum Beispiel eine Rücklauftemperaturanhebung durch Vorlauftemperaturbeimischung) kompensiert werden. DE 19906406 C1 offenbart ein Brennwertgerät, bei dem die Abgase eines brenngasbetriebenen Brenners zunächst in einem Wärmetauscher abgekühlt werden, wobei der Taupunkt unterschritten wird. Um das feuchte Abgas zu trocknen und thermischen Auftrieb zu ermöglichen, wird das Abgas danach mittels eines Wärmetauschers, der thermische Energie aus der Brennkammer bezieht, aufgeheizt.

EP 127939 A2 offenbart ein Heizgerät gemäß dem Oberbegriff des Anspruchs 1 und zeigt die Verbindung eines konventionellen Heizgerätes mit einer Wärmepumpe im Abgasstrom des Heizgerätes. Der Kondensator der Wärmepumpe befindet sich innerhalb eines Wärmetauschers, welcher den etwa 200°C warmen Abgasen des Heizgerätes ausgesetzt ist. Der Wärmetauschers wird durch Rücklaufwasser gekühlt. Somit wird das Abgas des Brenners zunächst vom Rücklaufwasser im Wärmetauscher gekühlt. Der Kondensator gibt ebenfalls Wärme an das Rücklaufwasser in dem Wärmetauscher 20 ab. Der Kondensator steht nicht im Kontakt mit dem Abgas des Brenners. Anschließend wird das gekühlte Abgas dem Verdampfer zugeführt und weiter abgekühlt, um das Kältemittel der Wärmepumpe zu verdampfen.

DE 3322991 A1 sieht vor, die Abgase eines Heizkessels in mehreren Wärmetauschern abzukühlen und mittels einer Wärmepumpe die Abgase auf -65°C abzukühlen, um eine nahezu totale Kondensation zu erreichen.

WO 2006/067820 A1 zeigt ebenfalls eine Verbindung eines konventionellen Heizgerätes mit einer Wärmepumpe. Der Kondensator der Wärmepumpe gibt Wärme an das Rücklaufwasser eines Heizungskreislaufs ab. Der Verdampfer der Wärmepumpe nimmt Wärme aus dem Abgas des Heizgerätes auf. Eine ähnliche Funktion ist aus DE 2822808 A1 bekannt.

Auch aus DE 3149183A1 ist die Kombination eines Heizkessels mit einer Wärmepumpe bekannt, bei der das Abgas des Heizkessels im Verdampfer auf bis zu 5°C abgekühlt und dann in die Umgebung geleitet wird.

Der Erfindung liegt die Aufgabe zugrunde, den Wirkungsgrad von brennstoffbeheizten Brennwert- und Heizwertheizgeräten weiter zu steigern. Insbesondere in Kombination mit Altbau- Heizungsanlagen und optional in Heizungsanlagen mit einem unsanierten Kamin das Abgas kaminfähig zu konditionieren.

Diese Aufgabe wird durch eine Vorrichtung mit den Merkmalen des Anspruchs 1 gelöst.

Vorteilhafte Ausgestaltungen ergeben sich durch die Merkmale der abhängigen Ansprüche.

Die Erfindung wird nun anhand der Figuren detailliert erläutert:

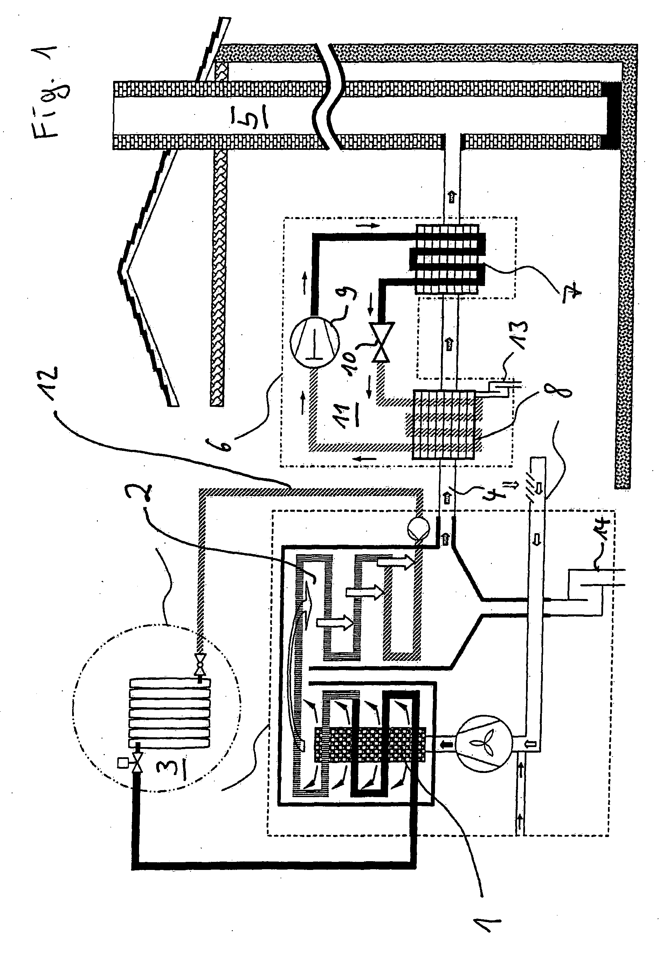

Figur 1 zeigt ein brennstoffbetriebenes Heizgerät mit einem Brenner 1 und einem Abgaswärmetauscher 2 mit Siphon 14; bei diesem handelt es sich um einen Kondensationsabgaswärmetauscher zum Abkühlen der Abgase des Brenners 1 unter den Taupunkt (ca. 57°C) unter Nutzung der Kondensationswärme und Übertragung auf einen Heizkreislauf 3. Eine Brauchwasserbereitung ist nicht explizit dargestellt. Die Abgase des Abgaswärmetauschers 2 werden über eine Abgasleitung 4 zu einem Kamin 5 und von dort in die Umgebung geleitet. In der Abgasleitung 4 stromab des Abgaswärmetauschers 2 sind der Verdampfer 8 mit Siphon 13 und Kondensator 7 einer Wärmepumpe 6, welche ferner über einen Kompressor 9 und ein Expansionsventil in 10 einem Kältemittelkreislauf 11 verfügt, angeordnet. Hierbei ist der Verdampfer 8 zwischen dem Abgaswärmetauscher 2 und dem Kondensator 7 der Wärmepumpe 6 derselben Wärmepumpe 6 angeordnet.

Nicht dargestellt ist eine weitere Variante, bei der in dem Kältemittelkreislauf 11 zwischen Kondensator 7 und Expansionsventil 10 ein weiterer Wärmetauscher angeordnet ist, wobei der Wärmetauscher auf der Sekundärseite mit der Rücklaufleitung 12 des Heizkreislaufs 3 verbunden ist.

Auch nicht dargestellt ist eine weitere Variante, bei der in der Abgasleitung 4 stromab des Abgaswärmetauschers 2 eine Vorrichtung zur Luftbeimischung angeordnet ist.

Der Brenner 1 des Heizgerätes verbrennt ein Brenngas (CₙHₘ) mit Luft, wodurch im wesentlichen Wasserdampf (H₂O) und Kohlendioxid (CO₂) entsteht. Im Abgaswärmetauscher 2 wird das Abgas durch das Wasser des Heizkreislaufs 3 abgekühlt. Kondensierender Wasserdampf wird über den Siphon 14 abgeleitet. Das feuchte und relativ kalte Abgas strömt durch die Abgasleitung 4 und durchströmt zunächst den Verdampfer 8 der Wärmepumpe 6. Das Abgas gibt hierbei weitere Wärme an das Kältemittel des Kältemittelkreislaufs 11 der Wärmepumpe 6, welches durch die Expansion im Expansionsventil 10 stark abgekühlt wurde, ab. Weiteres Kondensat aus dem Abgas wird über den Siphon 13 abgeführt. Im Kältemittelkreislauf 11 strömt das erwärmte Kältemittel zum Kompressor 9 und wird dort verdichtet, wodurch es sich erwärmt. Das erwärmte Kältemittel gibt im Kondensator 7 Wärme an das sehr trockene und kalte Abgas ab, so dass das Abgas vor Eintritt in den Kamin 5 trocken und relativ warm ist.

Ist optional in dem Kältemittelkreislauf 11 zwischen Kondensator 7 und Expansionsventil 10 ein weiterer Wärmetauscher angeordnet, wobei der Wärmetauscher auf der Sekundärseite mit der Rücklaufleitung 12 des Heizkreislaufs 3 verbunden ist, so kann Wärme aus dem Kältemittelkreislauf 11 auf den Heizungskreislauf 3 übertragen werden. Ferner wird hierdurch das Kältemittel vor dem Expansionsventil 10 kühler, wodurch auch das Kältemittel im Verdampfer 8 kälter ist und somit das Abgas weiter abgekühlt werden kann. Hierdurch lässt sich abermals mehr Kondensationswärme nutzen.

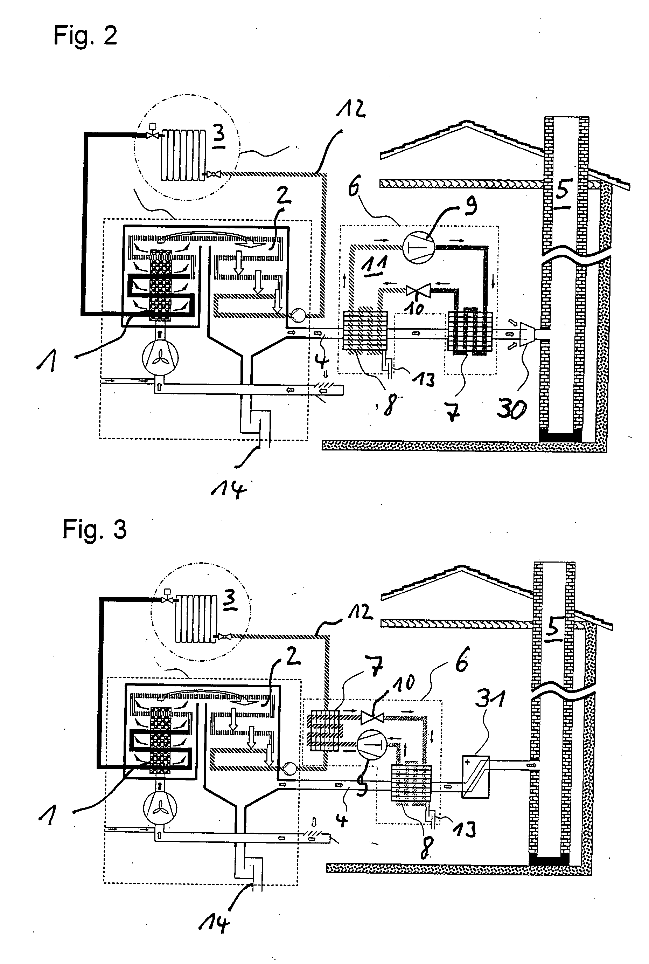

Optional kann ferner in der Abgasleitung 4 stromab des Abgaswärmetauschers 2 eine Vorrichtung zur Luftbeimischung 30 angeordnet sein, wodurch mittels der Luftbeimischung erreicht wird, dass das Abgas nicht mehr feucht ist, da dann die relative Luftfeuchtigkeit geringer als 100 % ist. Dies ist in Figur 2 dargestellt.

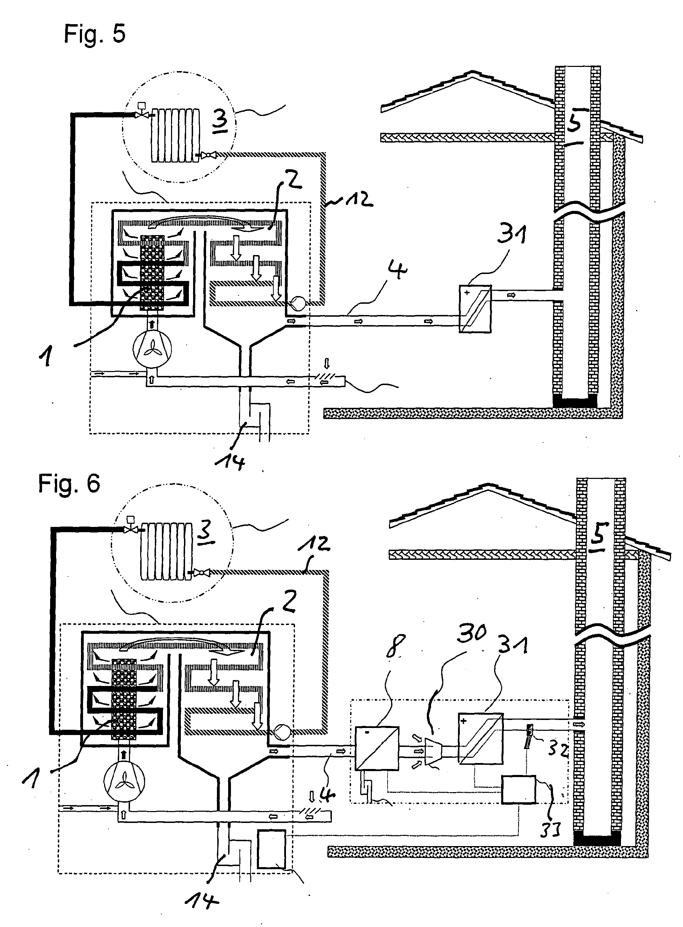

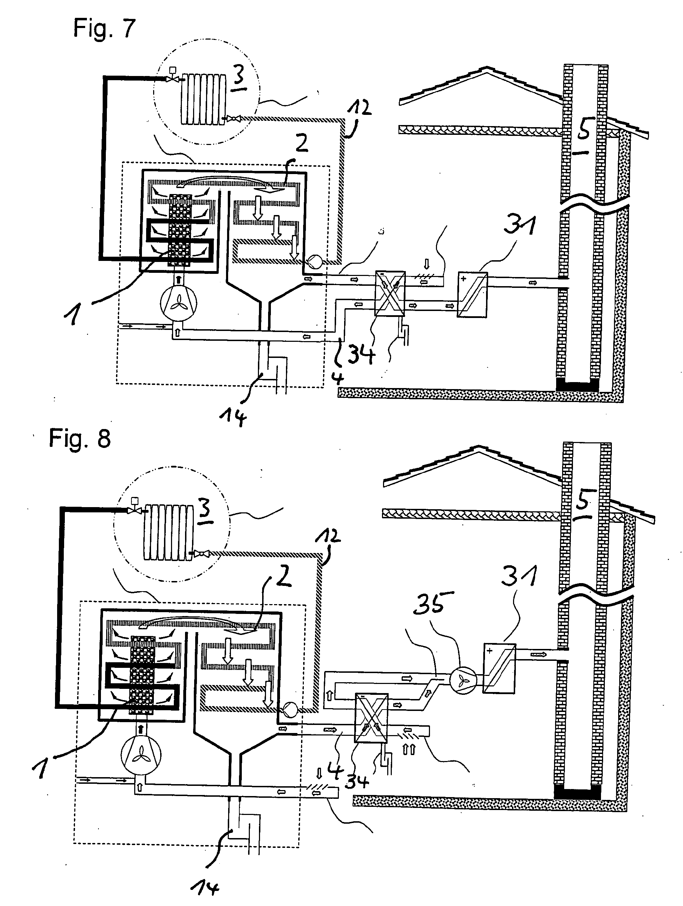

Es sind weitere Varianten zur thermischen Nachbehandlung des Abgases, die nicht unter den Schutz des Patentes fallen, denkbar. Diese sind in den Figuren 3 bis 8 dargestellt.

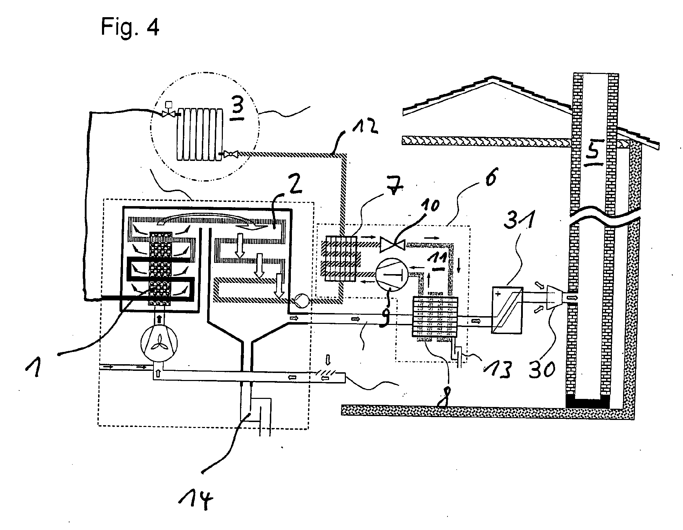

So ist denkbar, dass die Abgase eines Brennwertgerätes in dem Verdampfer 8 der Wärmepumpe 6 abgekühlt werden und der Kondensator 7 der Wärmepumpe 6 seine Wärme vollständig an den Heizungskreislauf 3 abgibt. Das sehr kalte Abgas muss dann mittels Überdruck eines Gebläses durch eine feuchtigkeitsbeständige Abgasleitung in die Umgebung geleitet werden. Soll das Abgas mittels thermischen Auftriebs entweichen, so kann es optional mittels einer Nachheizeinrichtung 31 (z.B. Gas- Pilotflamme, elektrisches Heizelements, oder ähnlichem) erhitzt werden. Dies ist in Figur 3 dargestellt. Figur 4 zeigt die Kombination von Kompressionswärmepumpe 6, Nachheizeinrichtung 31 und Luftbeimischung 30.

Figur 5 zeigt lediglich eine Nachheizeinrichtung 31 in der Abgasleitung 4, wodurch Abgase eines Brennwertgerätes für den Kaminbetrieb mit thermischen Auftrieb erhitzt werden kann.

Figur 6 zeigt die Kombination von Verdampfer 8, Luftbeimischung 30 und Nachheizeinrichtung 31 in einer anderen Reihenfolge als in Figur 4, wobei in Abhängigkeit des Signals eines Temperatur- und / oder Feuchtigkeitssensors 32 eine Regelung 33 die Heizleistung der Nachheizeinrichtung 31 einstellt.

Figur 7 zeigt eine Variante mit Verbrennungsluftvorwärmung in einem Luft-Abgaswärmetauscher 34 und Nachheizeinrichtung 31.

In Figur 8 ist eine Variante dargestellt, bei der Luft aus dem Aufstellraum gemeinsam mit dem Abgas über den Luft-Abgaswärmetauscher 34 geführt wird und anschließend gemeinsam in den Kamin 5 geleitet wird. Hierbei wird der Einsatz eines Abgasgebläses 35 notwendig.

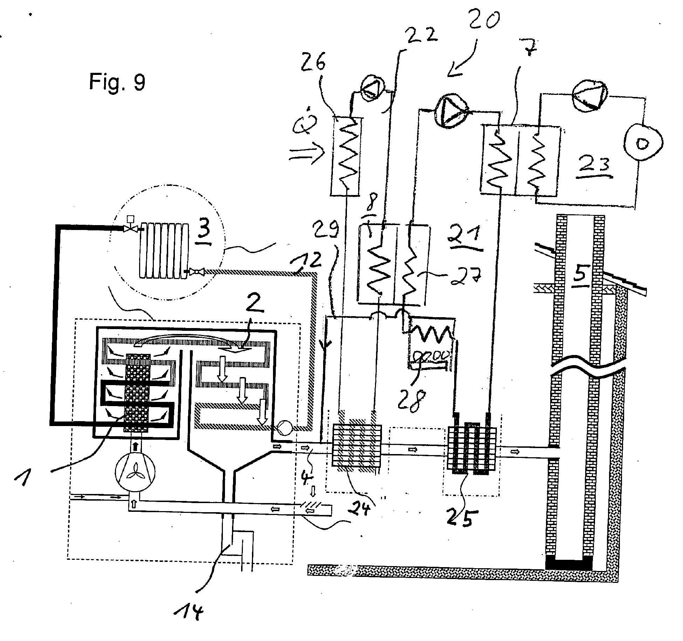

Figur 9 zeigt ein Heizgerät mit einer Adsorptionswärmepumpe 20 anstelle einer Kompressionswärmepumpe. Eine derartige Wärmepumpe ist beispielsweise aus EP 1 970 648 detailliert bekannt und braucht nicht weiter betrachtet zu werden, da es bei der vorliegenden Beschreibung nur auf die Integration der Adsorptionswärmepumpe 20, nicht jedoch den detaillierten Betrieb ankommt. Die Adsorptionswärmepumpe 20 verfügt über einen Umweltwärmekreislauf 22, einem Adsorberkreislauf 21 und einen Heizkreislauf 23. Über einen ersten Wärmetauscher 24 in der Abgasleitung 4 des Heizgerätes kann dem Abgas des Heizgerätes Wärme entzogen werden, wobei Kondensationswärme gewonnen werden kann. Ein zweiter Wärmetauscher 25 in der Abgasleitung 4 des Heizgerätes dient der Aufheizung des Abgases. Der erste Wärmetauscher 24 ist mit dem Umweltwärmekreislauf 22 verbunden; der zweite Wärmetauscher 25 mit dem Adsorberkreislauf 21.

Beim Betrieb nimmt in der Adsorptionsphase Kältemittel in einem Umweltwärmetauscher 26 im Umweltwärmekreislauf 22 Umweltwärme auf und wird anschließend im ersten Wärmetauscher 24 weiter erhitzt, um dann diese Wärme über einen Verdampfer 8 und einen als Adsorber arbeitenden Adsorber / Desorber 27 an den Adsorberkreislauf 21 abzugeben.

In der Desorptionsphase wird von einer Hochtemperatur- Wärmequelle (fossil oder regenerativ) 28 Wärme auf den als Desorber arbeitenden Adsorber / Desorber 27 übertragen. Der dem Adsorberkreislauf 21 führt über den zweiten Wärmetauscher 25, wo Wärme auf das Abgas des Heizgerätes übertragen wird. Die Abgasleitung 29 der brennstoffbetriebenen Wärmequelle 28 führt in die Abgasleitung 4 des Heizgerätes.

Umschaltventile und Verrohrungen für den abwechselnden Adsorber-/ Desorberbetrieb sind nicht dargestellt.

Weitere Varianten sind durch entsprechende Kombinationen der Komponenten denkbar.

Es ist auch denkbar, dass die Abgase eines Heizwertgerätes erst im Verdampfer 8 der Wärmepumpe unter den Taupunkt abgekühlt werden.

Die Abgase eines Brennwertgerätes können lediglich mittels des Kondensators 7 der Wärmepumpe 6 erhitzt werden, während die Wärmepumpe 6 den Verdampfer 8 mit einer Umweltwärmequelle (Erdsonde, Luft, Solar, etc.) koppelt.

## Patentansprüche

1. Brennstoffbetriebenes Heizgerät mit einem Brenner (1) und einem Abgaswärmetauscher (2), vorzugsweise Kondensationsabgaswärmetauscher, zum Abkühlen der Abgase des Brenners (1) und Übertragung auf einen Heizkreislauf (3) und / oder Brauchwasser, sowie einer Abgasleitung (4) zum Abführen der Abgase von dem Abgaswärmetauscher (2) in die Umgebung, vorzugsweise zum Abführen über einen Kamin (5), wobei in der Abgasleitung (4) stromab des Abgaswärmetauschers (2) der Kondensator (7) einer Kompressionswärmepumpe (6), welche ferner zumindest über einen Verdampfer (8), einen Kompressor (9) und ein Expansionsventil (10) in einem Kältemittelkreislauf (11) verfügt,
angeordnet ist, **dadurch gekennzeichnet,**
**dass** in der Abgasleitung (4) zwischen dem Abgaswärmetauscher (2) und dem Kondensator (7) der Wärmepumpe (6) der Verdampfer (8) derselben Wärmepumpe (6) angeordnet ist.

2. Brennstoffbetriebenes Heizgerät nach Anspruch 1, **dadurch gekennzeichnet, dass** in dem Kältemittelkreislauf (11) zwischen Kondensator (7) und Expansionsventil (10) ein Wärmetauscher angeordnet ist, wobei der Wärmetauscher auf der Sekundärseite mit der Rücklaufleitung (12) des Heizkreislaufs (3) oder der Kaltbrauchwasserleitung verbunden ist.

3. Brennstoffbetriebenes Heizgerät nach einem der Ansprüche 1 oder 2, **dadurch gekennzeichnet, dass** in der Abgasleitung (4) stromab des Abgaswärmetauschers (2) eine Vorrichtung zur Luftbeimischung (30) angeordnet ist.

4. Brennstoffbetriebenes Heizgerät nach einem der Ansprüche 1 bis 3, **dadurch gekennzeichnet, dass** in der Abgasleitung (4) stromab des Abgaswärmetauschers (2) ein Luft-Abgas-Wärmetauscher (34) angeordnet ist.

## Claims

1. Fuel-operated heater having a burner (1) and an exhaust gas heat exchanger (2), preferably a condensation heat exchanger, for cooling the exhaust gases of the burner (1) and transfer to a heating circuit (3) and / or hot water, and an exhaust pipe (4) for discharging the exhaust gases from the exhaust gas heat exchanger (2) into the environment, preferably for discharge via a fireplace (5), wherein in the exhaust pipe (4) downstream of the exhaust heat exchanger (2), the capacitor (7) of a compression heat pump (6) is arranged, which additionally has at least an evaporator (8), a compressor (9) and an expansion valve (10) in a refrigerant circuit (11), **characterised in that**
in the exhaust pipe (4) between the exhaust heat exchanger (2) and the capacitor (7) of the heat pump (6), the evaporator (8) of the same heat pump (6) is arranged.

2. Fuel-operated heater according to Claim 1, **characterised in that** a heat exchanger is arranged in the refrigerant circuit (11) between the capacitor (7) and the expansion valve (10), wherein the heat exchanger on the secondary side is connected to the return pipe (12) of the heating circuit (3) or the cold water pipe.

3. Fuel-operated heater according to any one of Claims 1 or 2, **characterised in that** in the exhaust pipe (4), an aeration device (30) is arranged downstream of the exhaust gas heat exchanger (2).

4. Fuel-operated heater according to any one of Claims 1 to 3, **characterised in that** in the exhaust pipe (4), an air-exhaust gas heat exchanger (34) is arranged downstream of the exhaust gas heat exchanger (2).

## Revendications

1. Appareil de chauffage fonctionnant avec un carburant, comprenant un brûleur (1) et un échangeur de chaleur de gaz brûlés (2), de préférence un échangeur de chaleur de gaz brûlés de condensation, pour refroidir les gaz brûlés du brûleur (1) et les transférer à un circuit de chauffage (3) et/ou à de l'eau industrielle, ainsi qu'une conduite de gaz brûlés (4) pour évacuer les gaz brûlés de l'échangeur de chaleur de gaz brûlés (2) dans l'environnement, de préférence pour les évacuer via une cheminée (5), dans lequel est agencé dans la conduite de gaz brûlés (4) en aval de l'échangeur de chaleur de gaz brûlés (2) le condenseur (7) d'une pompe à chaleur à compression (6) qui dispose en outre au moins d'un évaporateur (8), d'un compresseur (9) et d'une soupape de détente (10) dans un circuit de réfrigérant (11),
**caractérisé en ce que**,
dans la conduite de gaz brûlés (4) entre l'échangeur de chaleur de gaz brûlés (2) et le condenseur (7) de la pompe à chaleur (6) est agencé l'évaporateur (8) de la même pompe à chaleur (6).

2. Appareil de chauffage fonctionnant avec un carburant selon la revendication 1, **caractérisé en ce que** dans le circuit de réfrigérant (11) entre le condenseur (7) et la soupape de détente (10) est agencé un échangeur de chaleur, dans lequel l'échangeur de chaleur est relié, côté secondaire, à la conduite de retour (12) du circuit de chauffage (3) ou à la conduite d'eau industrielle froide.

3. Appareil de chauffage fonctionnant avec un carburant selon l'une quelconque des revendications 1 ou 2, **caractérisé en ce que** dans la conduite de gaz brûlés (4) en aval de l'échangeur de chaleur de gaz brûlés (2) est agencé un dispositif d'addition d'air (30).

4. Appareil de chauffage fonctionnant avec un carburant selon l'une quelconque des revendications 1 à 3, **caractérisé en ce que** dans la conduite de gaz brûlés (4) en aval de l'échangeur de chaleur de gaz brûlés (2) est agencé un échangeur de chaleur air-gaz brûlés (34).
